(19) Europäisches Patentamt

European Patent Office

Office européen des brevets

(11) **EP 1 418 443 B1**

(12) **FASCICULE DE BREVET EUROPEEN**

(45) Date de publication et mention
de la délivrance du brevet:
**04.06.2014 Bulletin 2014/23**

(51) Int Cl.:
***G01S 15/46*** *(2006.01)*

(21) Numéro de dépôt: **03300132.2**

(22) Date de dépôt: **25.09.2003**

(54) **Procédé et dispositif pour la localisation d'un rebord disposé à la jonction de deux surfaces globalement planes**

Verfahren und Vorrichtung zur Ortung einer Kante an der Verbindung zwischen zwei überwiegend flachen Flächen

Method and apparatus for locating an edge at the junction between two globally plane surfaces

(84) Etats contractants désignés:
**AT BE BG CH CY CZ DE DK EE ES FI FR GB GR HU IE IT LI LU MC NL PT RO SE SI SK TR**

(30) Priorité: **16.10.2002 FR 0212896**

(43) Date de publication de la demande:
**12.05.2004 Bulletin 2004/20**

(73) Titulaire: **ALSTOM Transport Technologies
92300 Levallois-Perret (FR)**

(72) Inventeurs:
• **Besserer, Bernard
17000 La Rochelle (FR)**
• **Frelicot, Carl
17220 Sainte-Soulle (FR)**
• **Roure, Christian
43500 Craponne sur Arzon (FR)**
• **Tregoat, Eric
75010 Paris (FR)**

(56) Documents cités:
**WO-A-98/58148        DE-A- 2 221 575
US-A- 4 490 038        US-A1- 2002 044 048
US-B1- 6 341 563**

**Description**

L'invention se rapporte à un procédé et à un dispositif pour la localisation dans un plan de référence d'un rebord disposé à la jonction de deux surfaces sensiblement planes et notamment à un procédé et à un dispositif pour la localisation d'un nez de quai par rapport à un véhicule ferroviaire. L'invention se rapporte également à un procédé de guidage utilisant un tel procédé de localisation et notamment à un procédé de guidage d'une marche mobile de véhicule ferroviaire par rapport à un nez de quai.

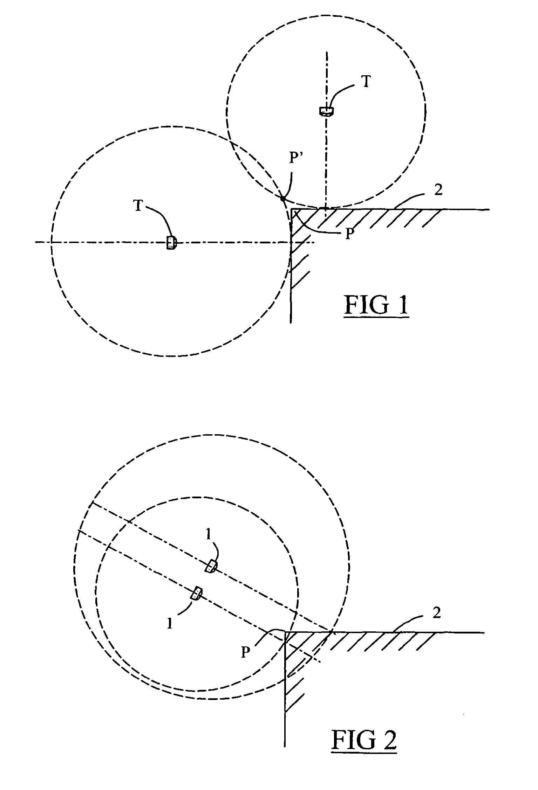

Il est connu dans le domaine des véhicules ferroviaires d'utiliser des marches mobiles pour faciliter l'embarquement et le débarquement des voyageurs sur un quai, de telles marches pouvant posséder une course contrôlée automatiquement aux moyens de télémètres afin d'optimiser l'espace final résultant entre la marche et le quai. Un tel dispositif est par exemple divulgué dans le document US 6 341 563 qui décrit un système pour le contrôle d'une marche mobile vis-à-vis d'un quai dans lequel deux télémètres, constitués chacun d'un ensemble émetteur + capteur à ultrasons, sont utilisés pour mesurer la distance entre la marche mobile et le quai par un procédé de triangulation. Toutefois, la localisation du quai par un procédé de localisation présente l'inconvénient de ne pas permettre une localisation très précise du nez du quai et nécessite de plus que les deux télémètres à ultrasons soient suffisamment éloignés du quai et suffisamment distants l'un de l'autre pour donner un résultat exploitable. En effet, ainsi que cela est représenté sur la figure 1, le procédé de triangulation permet, au moyen de deux télémètres T à ultrasons portés par le véhicule, de localiser un point P' correspondant à l'intersection des deux cercles représentant la distance à l'obstacle mesurée par chacun des télémètres. Conformément à la figure 1, le point P' obtenu par le procédé de triangulation donne une approximation acceptable du point P correspondant au nez du quai lorsque les deux télémètres à ultrasons sont suffisamment éloignés l'un de l'autre. Cependant, lorsque les deux télémètres T sont proches l'un de l'autre, ainsi que cela est représenté sur la figure 2, les deux cercles représentant la distance à l'obstacle mesurée par les télémètres peuvent ne pas se recouper et le procédé de triangulation ne permet plus d'obtenir une mesure de la position du point P'.

Aussi, un but de la présente invention est de proposer un procédé et un dispositif qui permettent de localiser avec une bonne précision le nez d'un quai par rapport à un véhicule ferroviaire. Un autre but de l'invention est de proposer un procédé de localisation qui puisse fonctionner avec des télémètres disposés à proximité les uns des autres.

A cet effet, l'invention a pour objet un procédé pour la localisation dans un plan de référence d'un rebord disposé à la jonction de deux surfaces globalement planes, le plan de référence étant sensiblement perpendiculaire à ces surfaces, caractérisé en ce qu'il comporte les étapes suivantes :

a) émission d'ondes à partir d'au moins un émetteur disposé dans le plan de référence, l'émetteur possédant un angle solide d'émission permettant aux ondes émises d'atteindre au moins partiellement les deux surfaces de part et d'autre du rebord,

b) réception au niveau d'au moins deux récepteurs des échos des ondes émises par l'émetteur, les récepteurs étant disposés dans le plan de référence de telle manière que l'un des récepteurs reçoit essentiellement les ondes réfléchis par l'une des surfaces tandis que l'autre récepteur reçoit essentiellement les signaux réfléchis par l'autre surface, la position dans le plan de référence des récepteurs et de l'émetteur dans le plan de référence étant connue par construction,

c) détermination par l'analyse de l'énergie du signal reçu par chaque récepteur de la valeur de l'angle d'inclinaison entre l'axe principal d'émission de l'émetteur et la normale à la surface ayant réfléchi les ondes captées par le récepteur.

d) calcul de la position, dans le plan de référence, du point d'impact des ondes sur chaque surface en mesurant le temps de parcours du signal émis par l'émetteur et reçu par chaque récepteur,

e) localisation du rebord dans le plan de référence par le calcul du point correspondant à l'intersection des droites passant respectivement par les points d'impact sur les deux surfaces et faisant un angle avec l'axe principal d'émission de l'émetteur correspondant à l'angle d'inclinaison calculé au cours de l'étape c) pour cette surface. Selon des modes particuliers de réalisation, le procédé de localisation selon l'invention peut comprendre l'une ou plusieurs des caractéristiques suivantes prises isolément ou selon toutes les combinaisons techniquement possibles :

-    au cours de l'étape c), l'angle d'inclinaison entre l'axe principal d'émission de l'émetteur et la normale à la surface ayant réfléchi les ondes captées par le récepteur est déterminé par le calcul de la pente de la courbe représentative de l'énergie normalisée du signal reçu dans le temps par le récepteur, cette pente de la courbe étant fonction de l'angle d'inclinaison et répondant à une relation déterminée préalablement par des mesures expérimentales,
-    l'émetteur et les récepteurs sont ultrasonores,
-    le rebord est le nez d'un quai d'embarquement et le plan de référence est porté par un véhicule ferroviaire comportant une marche mobile,
-    les ondes sont émises à partir d'un unique émetteur disposé à mi-chemin entre deux récepteurs en étant aligné avec ces derniers.

L'invention concerne également un dispositif pour la localisation dans un plan de référence d'un rebord disposé à la jonction de surfaces globalement planes au moyen du procédé précédemment décrit, caractérisé en ce qu'il comporte au moins un émetteur et au moins deux récepteurs disposés dans le plan de référence, l'émetteur possédant un angle solide d'émission permettant aux ondes émises par l'émetteur d'atteindre au moins partiellement les deux surfaces de part et d'autre du rebord, les récepteurs étant disposés dans le plan de référence de sorte que l'un des récepteurs reçoit essentiellement les signaux réfléchis par l'une des surfaces tandis que l'autre récepteur reçoit essentiellement les signaux réfléchis par l'autre surface, la position de l'émetteur et des récepteurs dans le plan de référence étant connue par construction.

Selon des modes particuliers de réalisation, le dispositif de localisation selon l'invention peut comprendre l'une ou plusieurs des caractéristiques suivantes prises isolément ou selon toutes les combinaisons techniquement possibles :

- le rebord est le nez d'un quai d'embarquement et le plan de référence est porté par un véhicule ferroviaire comportant une marche mobile ;
- la marche mobile supporte un unique émetteur et deux récepteurs disposés dans un plan perpendiculaire à l'axe longitudinal du véhicule ferroviaire, les récepteurs étant disposés de part et d'autre de l'émetteur en étant alignés sur une droite inclinée par rapport à la verticale ;
- la droite sur laquelle sont alignés les récepteurs et l'émetteur est inclinée de l'ordre de 30° par rapport à la verticale ;
- les émetteur et récepteurs sont des transducteurs ultrasonores.

L'invention concerne également un procédé pour le guidage d'un élément mobile par rapport à un rebord disposé à la jonction de deux surfaces globalement planes, caractérisé en ce qu'il comporte une étape de localisation dans laquelle le rebord est localisé au moyen du procédé de localisation précédemment décrit.

Selon une autre caractéristique de procédé de guidage selon l'invention, l'étape de localisation est réalisée de manière itérative au cours du guidage de l'élément mobile par rapport au rebord.

Selon encore une autre caractéristique de procédé de guidage selon l'invention, l'élément mobile est une marche de véhicule ferroviaire et le rebord est le nez d'un quai, la marche supportant un unique émetteur et deux récepteurs disposés dans un plan perpendiculaire à l'axe longitudinal du véhicule ferroviaire, les récepteurs étant disposés de part et d'autre de l'émetteur en étant alignés sur une droite inclinée par rapport à la verticale.

Selon encore une autre caractéristique de l'invention, lorsque l'étape de localisation ne permet pas localiser le nez de quai, les temps de parcours des ondes émises par l'émetteur et reçues, après réflexion sur le quai, par les récepteurs sont comparés pour déterminer si la marche est située au-dessus ou au-dessous du nez de quai.

On comprendra mieux les buts, aspects et avantages de la présente invention, d'après la description donnée ci-après d'un mode particulier de réalisation de l'invention, présenté à titre d'exemple non limitatif, en se référant aux dessins annexés, dans lesquels :

- les figures 1 et 2 sont des vues illustrant schématiquement le principe de localisation par triangulation selon l'art antérieur précédemment décrit;
- la figure 3 est une vue en coupe dans un plan vertical, d'une marche escamotable de véhicule ferroviaire en position repliée, cette marche étant équipée d'un dispositif de localisation et de guidage par rapport au nez de quai selon l'invention ;
- la figure 4 est en vue similaire à la figure 3 lorsque la marche escamotable est déployée ;
- la figure 5 est un graphe illustrant la forme générale de la tension du signal fourni dans le temps par l'un transducteurs récepteurs du dispositif de localisation selon l'invention lorsqu'il reçoit l'écho d'une onde émise par un émetteur ;
- la figure 6 est un graphe illustrant la forme générale de l'énergie du signal capté dans le temps par l'un des transducteurs récepteurs du dispositif de localisation selon l'invention lorsqu'il reçoit l'écho d'une onde émise par un émetteur ;
- la figure 7 est une vue schématique représentant partiellement un dispositif de localisation selon l'invention en regard de deux parois de réflexion inclinées différemment ;
- la figure 8 est une représentation schématique de l'énergie du signal capté par le récepteur du dispositif de localisation de la figure 7 en fonction de l'inclinaison de la paroi de réflexion;
- la figure 9 est un schéma illustrant géométriquement la détermination de la position du nez de quai lors de la dernière étape du procédé de localisation selon l'invention.

Pour faciliter la lecture du dessin, seuls les éléments nécessaires à la compréhension de l'invention ont été représentés. Les mêmes éléments portent les mêmes références d'une figure à l'autre.

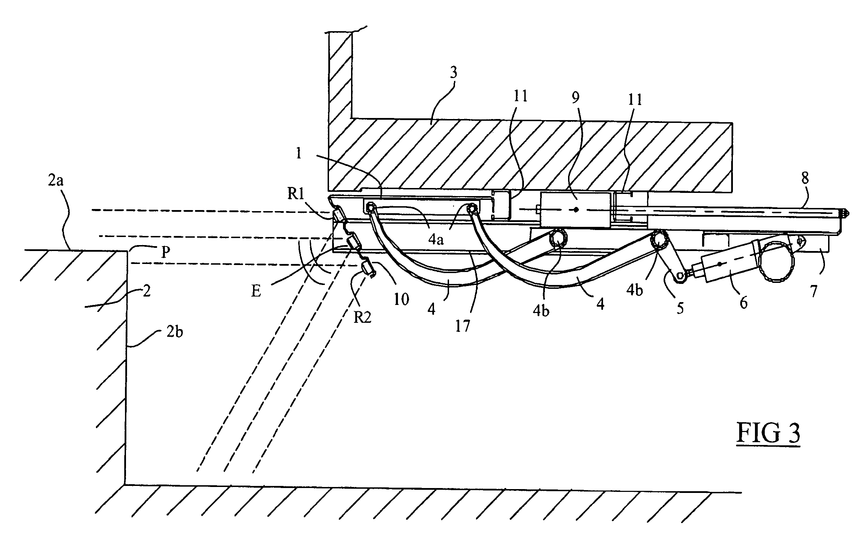

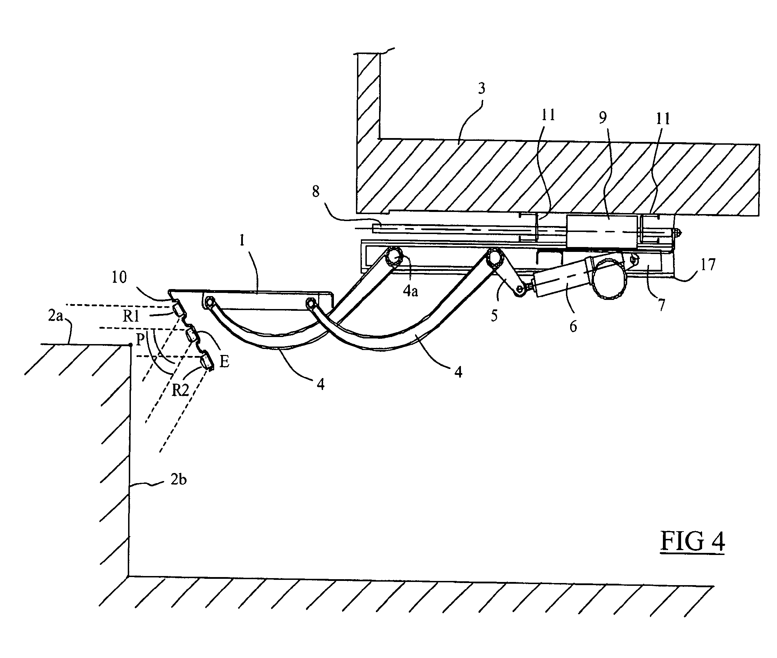

Les figures 3 et 4 représentent la partie inférieure d'un véhicule ferroviaire 3 arrêté à proximité d'un quai 2, ce véhicule comportant une marche 1 escamotable munie d'un dispositif de localisation selon l'invention. Dans la suite de la description, seul le mécanisme supportant un côté de la marche 1 escamotable sera décrit en relation avec les figures 3 et 4, la marche 1 comportant un mécanisme similaire de l'autre côté.

Conformément à la figure 3, la marche 1 est formée par un plateau horizontal présentant un bord avant sur lequel est rattaché un dispositif de localisation constitué par une paroi instrumentée 10. La paroi instrumentée 10 s'étend sous la marche 1 en faisant un angle de l'ordre de 30 ° par rapport à la verticale et supporte un système de télémesure ultrasonore constitué de deux récepteurs R1 et R2 et d'un émetteur E. L'émetteur E et les récepteurs R1 et R2 sont par exemple des transducteurs ultrasonores étanches de la société Murata respectivement de type MA40E7S et de type MA40E7R. De tels transducteurs émetteur ou récepteur ultrasonores présentent l'avantage de posséder respectivement un angle solide d'émission et de réception de 60° environ.

Les récepteurs R1 et R2 sont disposés respectivement en bordure du bord supérieur et inférieur de la paroi instrumentée 10 et l'émetteur E est disposé à mi-chemin entre ces deux récepteurs R1 et R2. Les faces arrières des récepteurs R1 et R2 et de l'émetteur E sont accolées contre la paroi instrumentée 10 de sorte que l'axe du cône d'émission de l'émetteur E et l'axe du cône de réception de chaque récepteur R1 et R2 sont inclinés par rapport à l'horizontal de 30° vers le bas. L'émetteur E et les récepteurs R1 et R2 sont reliés à un calculateur, non représenté, réalisant le traitement des signaux mesurés.

La marche 1 est supportée à chacune de ses extrémités latérales par deux bielles 4 en forme de col de cygne, les têtes de ces deux bielles 4 étant fixées respectivement à proximité du bord avant et arrière de la marche 1 au moyen d'une articulation 4a. Chaque bielle 4 comporte également un pied relié par une articulation 4b à un chariot 7 se déplaçant dans une glissière horizontale 17 fixée sous le véhicule 3 par deux pattes de fixations 11. La bielle 4 qui est reliée à la partie arrière de la marche 1 est solidaire d'un levier 5 s'étendant perpendiculairement au pied de la bielle, l'extrémité de ce levier 5 étant fixée à la tête d'un vérin électrique 6 dont le pied est fixé au chariot 7. Conformément à la figure 4, le déplacement de la tige du vérin électrique 6 assure l'entraînement en rotation de la bielle 4 arrière qui s'accompagne d'un déplacement vertical de la marche 1.

Le déplacement horizontal de la marche 1 peut être contrôlé indépendamment du mouvement des bielles 4 par le déplacement du chariot 7 dans la glissière horizontale 17, l'extrémité arrière du chariot 7 étant reliée par une cornière à une crémaillère à vis sans fin 8 entraînée en translation par une roue reliée à un moteur électrique 9 porté par la glissière 17.

Le procédé de localisation de la marche 1 par rapport au quai 2 va maintenant être décrit

Conformément aux figures 3 et 4, une ou plusieurs ondes ultrasonores sont émises en direction du quai 2 à partir de l'émetteur E de la marche 1 mobile lorsque le véhicule ferroviaire se trouve arrêté dans une gare de voyageur. Compte tenu de l'angle solide d'émission de l'émetteur E de l'ordre de 60° représenté en pointillé sur les figures, les ondes émises par l'émetteur E atteignent généralement le nez P du quai 2 et sont réfléchies à la fois par la face supérieure 2a du quai 2 et par sa face latérale 2b. L'écho de ces ondes, après réflexion sur le quai 2, est mesuré au niveau des récepteurs R1 et R2, ces derniers possédant un angle solide de réception de l'ordre de 60° représenté en pointillé sur les figures.

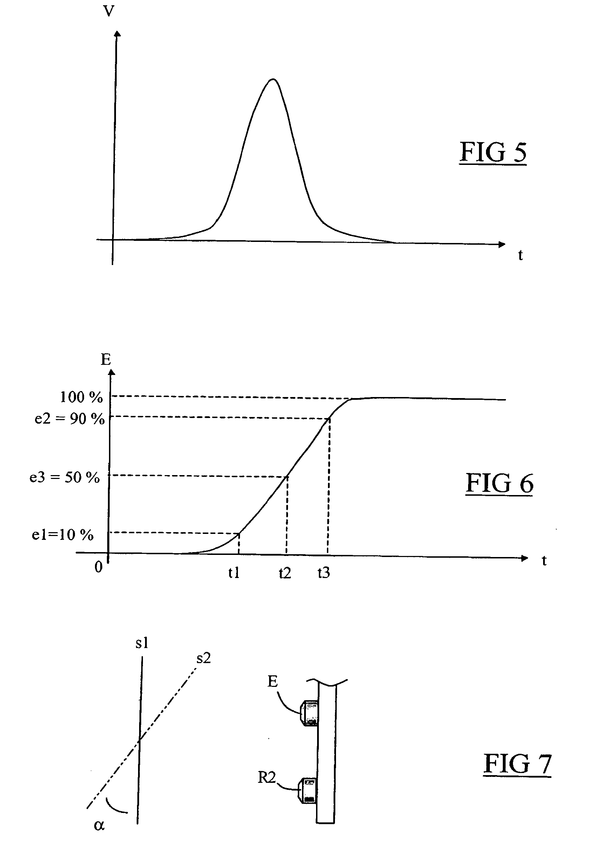

Un exemple de la forme du signal fourni dans le temps par les récepteurs R1 ou R2 est représenté sur la figure 5. Conformément à cette figure, un pic d'ondes se traduisant par un pic de tension est mesuré par les récepteurs R1 ou R2. A l'aide d'un calculateur de traitement, les signaux mesurés par les récepteurs R1 et R2 sont intégrés en temps réel, puis normalisés par rapport à l'énergie totale reçue par le récepteur correspondant, pour obtenir une courbe de l'énergie du signal mesuré comprise entre 0 et 100 % telle que représentée sur la figure 6.

Dans une étape suivante du procédé, le calculateur de traitement détermine la pente de la courbe de l'énergie normalisée mesurée au niveau de chacun des capteurs R1 et R2 en calculant la pente de la droite passant par exemple par les points e1 et e2 pour lesquels l'énergie est respectivement égale à 10 % et à 90 % de l'énergie totale mesurée. A partir de la valeur de pente de la courbe de l'énergie normalisée correspondant aux récepteurs R1 et R2, le calculateur en déduit respectivement les angles $\alpha$1 et $\alpha$2 que font les normales aux surfaces de réflexion des ondes par rapport à l'axe du cône d'émission de l'émetteur E. La valeur de chacun de ces angles $\alpha$1 et $\alpha$2 est calculée à l'aide d'une équation donnant la valeur de l'angle $\alpha$ en fonction de la pente de la courbe de l'énergie normalisée, cette équation étant obtenue préalablement en mesurant expérimentalement les différentes pentes de la courbe de l'énergie normalisée pour chacun des récepteurs R1 et R2 lorsque la paroi instrumentée 10 est placée devant une surface de réflexion présentée suivant différentes inclinaisons.

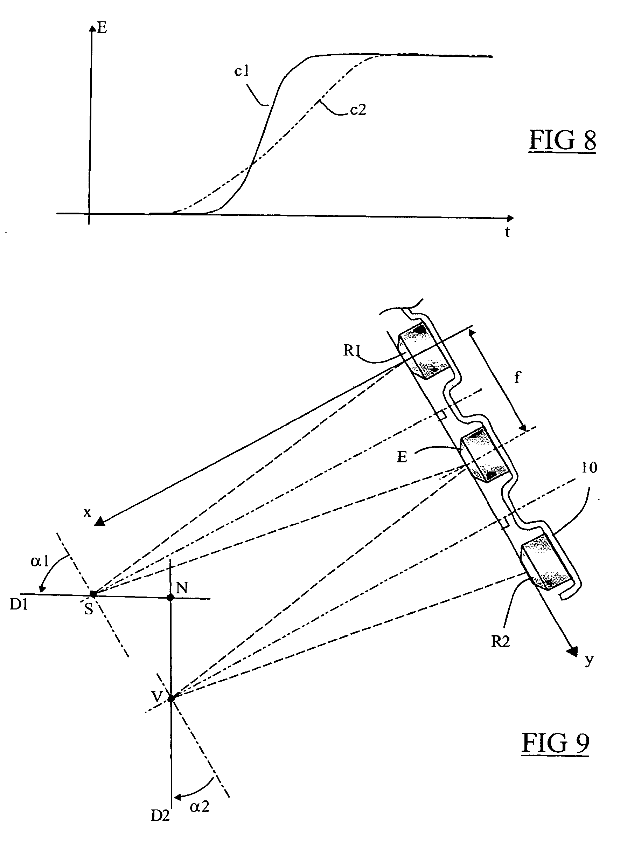

En effet, la demanderesse s'est rendu compte que la courbe de l'énergie normalisée est sensiblement constante pour un récepteur donné et que la pente de la courbe de l'énergie est fonction de l'angle que fait la surface de réflexion par rapport à l'émetteur. A titre d'exemple, en se référant à la figure 7, lorsque l'onde émise par l'émetteur E est réfléchie par une surface s1 perpendiculaire à l'axe du cône d'émission, la courbe de l'énergie normalisée mesurée à l'aide du capteur R2 est semblable à la courbe c1 représentée sur la figure 8 et lorsque l'onde émise par l'émetteur E est réfléchie par une surface s2 faisant un angle $\alpha$ avec la surface s1, la courbe de l'énergie normalisée mesurée à l'aide du capteur R1 est semblable à la courbe c2.

Dans une autre étape du procédé, le calculateur détermine les coordonnées du principal point d'impact des ondes avec la surface du quai 2 ayant réfléchi les ondes. Conformément à la figure 9, la détermination des coordonnées de ce point d'impact est réalisée en estimant que le point d'impact ayant réfléchie la plus grande partie des ondes émises se trouve sur la médiatrice du segment formé par l'émetteur E et le récepteur R1 ou R2 correspondant, soit en se référant à la figure, le point S pour le récepteur R1 et le point V pour le récepteur R2. Les coordonnées du point S peuvent être déterminées en estimant que le temps de parcours que met l'onde qui est émise par l'émetteur E, puis réfléchie au niveau du point S pour être enfin mesurée par le récepteur R1 correspond sensiblement au temps de parcours mesuré pour e3=50 % sur la courbe de l'énergie normalisée mesurée par le capteur R1. A ce temps de parcours correspond une distance d1 obtenue en divisant le temps de parcours par la vitesse de propagation de l'onde ultrasonore. De la même façon, les coordonnées du point V sont déterminées en estimant que le temps de parcours que met l'onde qui est émise par l'émetteur E, puis réfléchie au niveau du point V pour être enfin mesurée par le récepteur R2 correspond sensiblement au temps de parcours mesuré pour e3=50 % sur la courbe de l'énergie normalisée mesurée par le capteur R2. A ce temps de parcours correspond une distance d2 obtenue en divisant le temps de parcours par la vitesse de propagation de l'onde ultrasonore.

La distance f séparant les récepteurs R1 et R2 de l'émetteur E étant connue par construction, les coordonnées des points S et V dans le référentiel xR1y peuvent s'écrire par approximation :

$$S = \begin{pmatrix} xs \approx d1/2 \\ ys = f/2 \end{pmatrix}$$

$$V = \begin{pmatrix} xv \approx d2/2 \\ yv = 3*f/2 \end{pmatrix}$$

A partir de la connaissance des coordonnées des points S et V, le calculateur détermine alors par simple construction géométrique les coordonnées du point N correspondant à l'intersection de la droite D1 passant par S de pente $\alpha1$ avec la droite D2 passant par V de pente $\alpha2$, où $\alpha1$ et $\alpha2$ sont les angles déterminés lors de l'étape précédente du procédé. Les coordonnées du point N ainsi obtenues donne une bonne estimation de la position du nez P du quai 2.

Un tel procédé de localisation présente l'avantage de permettre la localisation précise d'un nez de quai avec des récepteurs et des émetteurs disposés à proximité les uns des autres. Le dispositif de localisation selon l'invention présente également l'avantage de ne nécessiter qu'un seul émetteur et deux récepteurs pour fonctionner.

L'invention concerne également un procédé de guidage de la marche 1 intégrant le procédé de localisation du nez de quai P précédemment décrit de façon à amener la marche 1 dans une position optimisée par rapport au nez de quai P.

Un tel procédé de guidage de la marche 1 utilise avantageusement le procédé de localisation précédemment décrit de manière itérative pour connaître à chaque instant la position de la marche 1 par rapport au nez de quai P et agit en conséquence sur le vérin électrique 6 et le moteur 9 contrôlant respectivement la hauteur et la position latérale de la marche 1 pour amener cette dernière dans la position recherchée.

Dans un mode de réalisation préférentiel, le procédé de guidage prend également en compte les cas où le procédé de localisation ne permet par d'obtenir les coordonnées du point N car la zone balayée par l'émetteur E n'atteint pas le nez P du quai 2. Un tel cas peut se produire lorsque le quai 2 est très haut et que la marche 1 se trouve dans une position trop basse pour que les ondes émises par l'émetteur E puisse être réfléchie par la surface supérieure 2a du quai 2. Un tel cas peut également se produire lorsque le quai 2 est très bas et que la marche 1 se trouve dans une position trop haute pour que les ondes émises par l'émetteur E soient réfléchies par la face latérale 2b du quai 2.

Ces cas sont détectés par le procédé de guidage par une simple analyse des angles que font entre elles les droites D1 et D2 calculés par le procédé localisation, ces angles devant normalement toujours restés proches de 90°. Ainsi, lorsque les droites D1 et D2 du procédé de localisation forment entre elles un angle inférieur à une valeur seuil donnée, par exemple 60°, le procédé de guidage compare les temps de parcours de l'onde émise par l'émetteur E et captée par les récepteurs R1 et R2 pour détecter si les ondes sont réfléchies par la surface supérieure 2a ou par la surface latérale 2b du quai 2. Lorsque le temps de parcours de l'onde captée par le récepteur R1 est inférieur au temps de parcours de l'onde captée par le récepteur R2, cela signifie que la paroi instrumentée 10 est en regard de la paroi latérale 2b du quai 2 et le procédé de guidage commande le vérin électrique 6 afin de monter la marche 1 jusqu'à ce que la paroi instrumentée 10 puisse détecter le nez du quai 2. A l'inverse, lorsque le temps de parcours de l'onde captée par le récepteur R1 est supérieur au temps de parcours de l'onde capté par le récepteur R2, cela signifie que la paroi instrumentée 10 est au-dessus de la paroi supérieure 2a du quai 2 et le procédé de guidage commande le vérin électrique 6 afin de descendre la marche 1 jusqu'à ce que la paroi instrumentée 10 puisse détecter le nez du quai 2.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans le mode de réalisation précédemment décrit l'angle d'inclinaison de la paroi instrumentée par rapport à la verticale a été choisi égale à 30°. Toutefois dans des variantes de réalisation cet angle pourra être modifié et sera préférentiellement compris entre 20 et 70°.

## Revendications

1. Procédé pour la localisation dans un plan de référence d'un rebord (P) disposé à la jonction de deux surfaces (2a, 2b) globalement planes, ledit plan de référence étant sensiblement perpendiculaire aux surfaces (2a, 2b), **caractérisé en ce qu'**il comporte les étapes suivantes :

   - a) émission d'ondes à partir d'au moins un émetteur (E) disposé dans le plan de référence, ledit émetteur (E) possédant un angle solide d'émission permettant aux ondes émises d'atteindre au moins partiellement les deux surfaces (2a, 2b) de part et d'autre dudit rebord (P),
   - b) réception au niveau d'au moins deux récepteurs (R1, R2) des échos des ondes émises par l'émetteur (E), lesdits récepteurs (R1, R2) étant disposés dans le plan de référence de telle manière que l'un des récepteurs reçoit essentiellement les ondes réfléchis par l'une des surfaces (2a, 2b) tandis que l'autre récepteur reçoit essentiellement les signaux réfléchis par l'autre surface, la position des récepteurs (R1, R2) et de l'émetteur (E) dans le plan de référence étant connue par construction,
   - c) détermination par l'analyse de l'énergie du signal reçu par chaque récepteur (R1, R2) de la valeur de l'angle d'inclinaison ($\alpha1$, $\alpha2$) entre l'axe principal d'émission de l'émetteur (E) et la normale à la surface (2a, 2b) ayant réfléchi les ondes captées par ledit récepteur,
   - d) calcul de la position dans le plan de référence du point d'impact (S, V) des ondes sur chaque surface (2a, 2b) en mesurant le temps de parcours du signal émis par l'émetteur (E) et reçu par chaque récepteur (R1, R2),
   - e) localisation dudit rebord (P) dans le plan de référence par le calcul du point (N) correspondant à l'intersection des droites passant par les deux points d'impact (S, V) et faisant respectivement un angle ($\alpha1$, $\alpha2$) avec l'axe principal d'émission de l'émetteur (E).

2. Procédé pour la localisation selon la revendication 1, **caractérisé en ce qu'**au cours de l'étape c), l'angle d'inclinaison ($\alpha1$, $\alpha2$) est déterminé par le calcul de la pente de la courbe représentative de l'énergie normalisée du signal reçu dans le temps par ledit récepteur, cette pente étant fonction de l'angle d'inclinaison ($\alpha1$, $\alpha2$) et répondant à une relation déterminée préalablement par des mesures expérimentales.

3. Procédé pour la localisation selon l'une quelconque des revendications 1 à 2, **caractérisé en ce que** l'émetteur (E) et les récepteurs (R1, R2) sont ultrasonores.

4. Procédé pour la localisation selon l'une quelconque des revendications 1 à 3, **caractérisé en ce que** ledit rebord (P) est le nez d'un quai d'embarquement (2) et le plan de référence est porté par un véhicule ferroviaire comportant une marche mobi le (1).

5. Procédé pour la localisation selon l'une quelconque des revendications 1 à 4, **caractérisé en ce que** les ondes sont émises à partir d'un unique émetteur (E) disposé à mi-chemin entre deux récepteurs (R1, R2) en étant aligné avec ceux-ci.

6. Dispositif pour la localisation dans un plan de référence d'un rebord (P) disposé à la jonction de deux surfaces (2a, 2b) au moyen du procédé selon l'une quelconque des revendications 1 à 5, caractérisé en qu'il comporte au moins un émetteur et au moins deux récepteurs disposés dans le plan de référence, ledit émetteur possédant un angle solide d'émission permettant aux ondes émises par ledit émetteur d'atteindre au moins partiellement les deux surfaces (2a, 2b) de part et d'autre dudit rebord (P), lesdits récepteurs (R1, R2) étant disposés dans le plan de référence de sorte que l'un des récepteurs (R1,R2) reçoit essentiellement les signaux réfléchis par l'une des surfaces (2a,2b) tandis que l'autre récepteur reçoit essentiellement les signaux réfléchis par l'autre surface, la position dudit émetteur (E) et desdits récepteurs (R1, R2) dans le plan de référence étant connue par construction.

7. Dispositif pour la localisation selon la revendication 6, **caractérisé en ce que** le rebord (P) est le nez d'un quai d'embarquement (2) et le plan de référence est porté par un véhicule ferroviaire comportant une marche mobile (1).

8. Dispositif pour la localisation selon la revendication 7, **caractérisé en ce que** ladite marche (1) mobile supporte un unique émetteur (E) et deux récepteurs (R1, R2) disposés dans un plan perpendiculaire à l'axe longitudinal du véhicule ferroviaire, lesdits récepteurs (R1, R2) étant disposés de part et d'autre de l'émetteur (E) en étant alignés sur une droite inclinée par rapport à la verticale.

9. Dispositif pour la localisation selon la revendication 8, **caractérisé en ce que** ladite droite sur laquelle sont alignés les récepteurs (R1, R2) et l'émetteur (E) est inclinée de l'ordre de 30° par rapport à la verticale.

**10.** Dispositif pour la localisation selon la revendication 9, **caractérisé en ce que** lesdits émetteur (E) et récepteurs (R1, R2) sont des transducteurs ultrasonores.

**11.** Procédé pour le guidage d'un élément mobile (1) par rapport à un rebord (P) disposé à la jonction de deux surfaces (2a, 2b) globalement planes, **caractérisé en ce qu'**il comporte une étape de localisation dans laquelle le rebord (P) est localisé au moyen du procédé selon l'une quelconque des revendications 1 à 5.

**12.** Procédé pour le guidage selon la revendication 11, **caractérisé en ce que** ladite étape de localisation est réalisée de manière itérative au cours du guidage de l'élément mobile (1) par rapport au rebord (P).

**13.** Procédé pour le guidage selon la revendication 12, **caractérisé en ce que** ledit élément mobile (1) est une marche de véhicule ferroviaire et le rebord (P) est le nez d'un quai (2), ladite marche (1) supportant un unique émetteur (E) et deux récepteurs (R1, R2) disposés dans un plan perpendiculaire à l'axe longitudinal du véhicule ferroviaire, les récepteurs (R1, R2) étant disposés de part et d'autre de l'émetteur (E) en étant alignés sur une droite inclinée par rapport à la verticale.

**14.** Procédé pour le guidage selon la revendication 13, **caractérisé en ce que** lorsque l'étape de localisation ne permet pas localiser le nez de quai (P), les temps de parcours des ondes émises par l'émetteur (E) et reçues, après réflexion sur le quai (2), par les récepteurs (R1, R2) sont comparés pour déterminer si la marche (1) est située au dessus ou au-dessous du nez de quai (P).

## Patentansprüche

**1.** Verfahren zur Positionsbestimmung eines Rands (P), der an der Verbindungsstelle von zwei global ebenen Flächen (2a, 2b) angeordnet ist, in einer Bezugsebene, wobei die Bezugsebene im Wesentlichen lotrecht zu den Flächen (2a, 2b) ist, **dadurch gekennzeichnet, dass** es die folgenden Schritte aufweist:

a) Senden von Wellen ausgehend von mindestens einem in der Bezugsebene angeordneten Sender (E), wobei der Sender (E) einen Senderaumwinkel besitzt, der es den gesendeten Wellen ermöglicht, die zwei Flächen (2a, 2b) zu beiden Seiten des Rands (P) zumindest teilweise zu erreichen,
b) Empfang der Echos der vom Sender (E) gesendeten Wellen im Bereich von mindestens zwei Empfängern (R1, R2), wobei die Empfänger (R1, R2) derart in der Bezugsebene angeordnet sind, dass einer der Empfänger im Wesentlichen die von einer der Flächen (2a, 2b) reflektierten Wellen empfängt, während der andere Empfänger im Wesentlichen die von der anderen Fläche reflektierten Signale empfängt, wobei die Position der Empfänger (R1, R2) und des Senders (E) in der Bezugsebene bauartbedingt bekannt ist,
c) Bestimmung, durch die Analyse der Energie des von jedem Empfänger (R1, R2) empfangenen Signals, der Größe des Neigungswinkels ($\alpha$1, $\alpha$2) zwischen der Hauptsendeachse des Senders (E) und der Normalen zu der Fläche (2a, 2b), die die vom Empfänger aufgefangenen Wellen reflektiert hat,
d) Berechnung der Position des Auftreffpunkts (S, V) der Wellen auf jeder Fläche (2a, 2b) in der Bezugsebene durch Messen der Ausbreitungszeit des vom Sender (E) gesendeten und von jedem Empfänger (R1, R2) empfangenen Signals,
e) Positionsbestimmung des Rands (P) in der Bezugsebene durch die Berechnung des Punkts (N), der dem Schnittpunkt der Geraden entspricht, die durch die zwei Auftreffpunkte (S, V) gehen und je einen Winkel ($\alpha$1, $\alpha$2) mit der Hauptsendeachse des Senders (E) bilden.

**2.** Positionsbestimmungsverfahren nach Anspruch 1, **dadurch gekennzeichnet, dass** während des Schritts c) der Neigungswinkel ($\alpha$1, $\alpha$2) durch die Berechnung der Steigung der für die normierte Energie des durch den Empfänger in der Zeit empfangenen Signals repräsentativen Kurve bestimmt wird, wobei diese Steigung vom Neigungswinkel ($\alpha$1, $\alpha$2) abhängt und einer vorab durch experimentelle Messungen bestimmten Beziehung entspricht.

**3.** Positionsbestimmungsverfahren nach einem der Ansprüche 1 bis 2, **dadurch gekennzeichnet, dass** der Sender (E) und die Empfänger (R1, R2) Ultraschallsender und -empfänger sind.

**4.** Positionsbestimmungsverfahren nach einem der Ansprüche 1 bis 3, **dadurch gekennzeichnet, dass** der Rand (P) die Kante eines Bahnsteigs (2) ist, und die Bezugsebene von einem Schienenfahrzeug getragen wird, das eine bewegliche Stufe (1) aufweist.

**5.** Positionsbestimmungsverfahren nach einem der Ansprüche 1 bis 4, **dadurch gekennzeichnet, dass** die Wellen ausgehend von einem einzigen Sender (E) gesendet werden, der auf halbem Weg zwischen zwei Empfängern (R1, R2) angeordnet ist, indem er mit diesen ausgerichtet ist.

**6.** Vorrichtung zur Positionsbestimmung, in einer Bezugsebene, eines an der Verbindungsstelle von zwei Flächen (2a, 2b) angeordneten Rands (P) mittels des Verfahrens nach einem der Ansprüche 1 bis 5, **dadurch gekennzeichnet, dass** sie mindestens einen Sender und mindestens zwei Empfänger aufweist, die in der Bezugsebene angeordnet sind, wobei der Sender einen Senderaumwinkel besitzt, der es den vom Sender gesendeten Wellen erlaubt, die zwei Flächen (2a, 2b) zu beiden Seiten des Rands (P) zumindest teilweise zu erreichen, wobei die Empfänger (R1, R2) so in der Bezugsebene angeordnet sind, dass einer der Empfänger (R1, R2) im Wesentlichen die von einer der Flächen (2a, 2b) reflektierten Signale empfängt, während der andere Empfänger im Wesentlichen die von der anderen Fläche reflektierten Signale empfängt, wobei die Position des Senders (E) und der Empfänger (R1, R2) in der Bezugsebene bauartbedingt bekannt ist.

**7.** Positionsbestimmungsvorrichtung nach Anspruch 6, **dadurch gekennzeichnet, dass** der Rand (P) die Kante eines Bahnsteigs (2) ist, und die Bezugsebene von einem Schienenfahrzeug getragen wird, das eine bewegliche Stufe (1) aufweist.

**8.** Positionsbestimmungsvorrichtung nach Anspruch 7, **dadurch gekennzeichnet, dass** die bewegliche Stufe

(1) einen einzigen Sender (E) und zwei Empfänger (R1, R2) trägt, die in einer Ebene lotrecht zur Längsachse des Schienenfahrzeugs angeordnet sind, wobei die Empfänger (R1, R2) zu beiden Seiten des Senders (E) angeordnet sind, indem sie an einer bezüglich der Senkrechten geneigten Geraden ausgerichtet sind.

**9.** Positionsbestimmungsvorrichtung nach Anspruch 8, **dadurch gekennzeichnet, dass** die Gerade, an der die Empfänger (R1, R2) und der Sender (E) ausgerichtet sind, in der Größenordnung von 30° bezüglich der Senkrechten geneigt ist.

**10.** Positionsbestimmungsvorrichtung nach Anspruch 9, **dadurch gekennzeichnet, dass** die Sender (E) und Empfänger (R1, R2) Ultraschallwellenwandler sind.

**11.** Verfahren zur Führung eines beweglichen Elements (1) bezüglich eines Rands (P), der an der Verbindungsstelle von zwei im Wesentlichen ebenen Flächen (2a, 2b) angeordnet ist, **dadurch gekennzeichnet, dass** es einen Positionsbestimmungsschritt aufweist, in dem die Position des Rands (P) mittels des Verfahrens nach einem der Ansprüche 1 bis 5 bestimmt wird.

**12.** Führungsverfahren nach Anspruch 11, **dadurch gekennzeichnet, dass** der Positionsbestimmungsschritt iterativ während des Führens des beweglichen Elements (1) bezüglich des Rands (P) ausgeführt wird.

**13.** Führungsverfahren nach Anspruch 12, **dadurch gekennzeichnet, dass** das bewegliche Element (1) eine Stufe eines Schienenfahrzeugs und der Rand (P) die Kante eines Bahnsteigs (2) ist, wobei die Stufe (1) einen einzigen Sender (E) und zwei Empfänger (R1, R2) trägt, die in einer Ebene lotrecht zur Längsachse des Schienenfahrzeugs angeordnet sind, wobei die Empfänger (R1, R2) zu beiden Seiten des Senders (E) angeordnet sind, indem sie an einer bezüglich der Senkrechten geneigten Geraden ausgerichtet sind.

**14.** Führungsverfahren nach Anspruch 13, **dadurch gekennzeichnet, dass**, wenn der Positionsbestimmungsschritt es nicht ermöglicht, die Position der Bahnsteigkante (P) zu bestimmen, die Ausbreitungszeiten der vom Sender (E) gesendeten und nach Reflektion auf dem Bahnsteig (2) von den Empfängern (R1, R2) empfangenen Wellen verglichen werden, um festzustellen, ob die Stufe (1) sich über oder unter der Bahnsteigkante (P) befindet.

## Claims

**1.** Method for locating in a reference plane an edge (P) arranged at the junction between two globally plane surfaces (2a, 2b), said reference plane being substantially perpendicular to the surfaces (2a, 2b), **characterized in that** it includes the following steps:

- a) emission of waves from at least one emitter (E) arranged in the reference plane, said emitter (E) possessing a solid angle of emission allowing the emitted waves to at least partly reach the two surfaces (2a,2b) on either side of said edge (P),
- b) reception at the level of at least two receivers (R1, R2) of the echoes of the waves emitted by the emitter (E), said receivers (R1, R2) being arranged in the reference plane in such a way that one of the receivers essentially receives the waves reflected by one of the surfaces (2a, 2b) whereas the other receiver essentially receives the signals reflected by the other surface, the position of the receivers (R1, R2) and of the emitter (E) in the reference plane being known by construction,
- c) determination by analysis of the energy of the signal received by each receiver (R1, R2) of the value of the angle of inclination ($\alpha 1$, $\alpha 2$) between the main axis of emission of the emitter (E) and the normal to the surface (2a, 2b) having reflected the waves picked up by said receiver,
- d) calculation of the position in the reference plane of the impact point (S,V) of the waves on each surface (2a, 2b) by measuring the journey time of the signal emitted by the emitter (E) and received by each receiver (R1, R2),
- e) location of said edge (P) in the reference plane by calculation of the point (N) corresponding to the intersection of the straight lines passing through the two impact points (S, V) and respectively making an angle ($\alpha$1, $\alpha$2) with the main axis of emission of the emitter (E).

2. Location method according to Claim 1, **characterized in that** during step c), the angle of inclination ($\alpha$1, $\alpha$2) is determined by calculation of the slope of the curve representing the normalized energy of the signal received **in that** time by said receiver, this slope being a function of the angle of inclination ($\alpha$1, $\alpha$2) and obeying a relationship determined previously by experimental measurement.

3. Location method according to any one of Claims 1 to 2, **characterized in that** the emitter (E) and the receivers (R1, R2) are ultrasonic.

4. Location method according to any one of Claims 1 to 3, **characterized in that** said edge (2) is the edge of a departure platform (2) and the reference plane is carried by a railway vehicle including a mobile step (1).

5. Location method according to any one of Claims 1 to 4, **characterized in that** the waves are emitted from a single emitter (E) arranged half-way between two receivers (R1, R2) while being aligned with the latter.

6. Device for locating in a reference plane an edge (P) arranged at the junction between two surfaces (2a, 2b) by means of the method according to any one of Claims 1 to 5, **characterized in that** it includes at least one emitter and at least two receivers arranged in the reference plane, said emitter possessing a solid angle of emission allowing the waves emitted by said emitter to at least partly reach the two surfaces (2a, 2b) on either side of the edge (P), said receivers (R1, R2) being arranged in the reference plane so that one of the receivers (R1, R2) essentially receives the signals reflected by one of the surfaces (2a, 2b), whereas the other receiver essentially receives the signals reflected by the other surface, the position of said emitter (E) and of said receivers (R1, R2) in the reference plane being known by construction.

7. Location device according to Claim 6, **characterized**

**in that** the edge (P) is the edge of a departure platform (2) and the reference plane is carried by a railway vehicle including a mobile step (1).

8. Location device according to Claim 7, **characterized in that** said mobile step (1) supports a single emitter (E) and two receivers (R1, R2) arranged in a plane perpendicular to the longitudinal axis of the railway vehicle, said receivers (R1, R2) being arranged on either side of the emitter (E) while being aligned on a straight line inclined with respect to the vertical.

9. Location device according to Claim 8, **characterized in that** said straight line on which the receivers (R1, R2) and the emitter (E) are aligned is inclined at about 30° with respect to the vertical.

10. Location device according to Claim 9, **characterized in that** said emitter (E) and receivers (R1, R2) are ultrasonic transducers.

11. Method for the guiding of a mobile element (1) with respect to an edge (P) arranged at the junction between two globally plane surfaces (2a, 2b), **characterized in that** it includes a location step in which the edge (P) is located by means of the method according to any one of Claims 1 to 5.

12. Guiding method according to Claim 11, **characterized in that** said location step is carried out iteratively during the guiding of the mobile element (1) with respect to the edge (P).

13. Guiding method according to Claim 12, **characterized in that** said mobile element (1) is a step of a railway vehicle and the edge (P) is the edge of a platform (2), said step (1) bearing a single emitter (E) and two receivers (R1, R2) arranged in a plane perpendicular to the longitudinal axis of the railway vehicle, the receivers (R1, R2) being arranged on either side of the emitter (E) while being aligned on a straight line inclined with respect to the vehicle.

14. Guiding method according to Claim 13, **characterized in that** when the location step does not make it possible to locate the platform edge (P), the journey times of the waves emitted by the emitter (E) and received, after reflection off the platform (2), by the receivers (R1, R2) are compared to determine whether the step (1) is situated above or below the platform edge (P).

FIG 1

FIG 2

FIG 3

FIG 4

EP 1 418 443 B1

EP 1 418 443 B1

V

FIG 5

t

E

100 %
e2 = 90 %

e3 = 50 %

e1=10 %

0        t1    t2   t3        t

FIG 6

s1     s2

E

R2

α

FIG 7

13

FIG 8

FIG 9

**EP 1 418 443 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6341563 B